(19) Europäisches Patentamt
European Patent Office
Office européen des brevets

(11) **EP 4 231 261 A1**

(12) **EUROPEAN PATENT APPLICATION**

(43) Date of publication:
**23.08.2023 Bulletin 2023/34**

(21) Application number: **22202462.2**

(22) Date of filing: **19.10.2022**

(51) International Patent Classification (IPC):
**G07G 1/14** (2006.01)   **G06Q 20/20** (2012.01)
**G06V 20/52** (2022.01)   **G06V 40/20** (2022.01)

(52) Cooperative Patent Classification (CPC):
**G07G 1/14; G06Q 20/202; G06Q 20/203; G06Q 20/208; G06V 20/52; G06V 40/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.02.2022   JP 2022025481**

(71) Applicant: **Fujitsu Limited**
**Kawasaki-shi, Kanagawa 211-8588 (JP)**

(72) Inventor: **Iwasaki, Sho**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING APPARATUS**

(57)     An information processing program causes a computer to execute a process including, identifying an action of a specific user picking up a piece of merchandise from the shelf and from a video of an area including an accounting machine in the store, each of the specific user and the accounting machine, storing information, receiving a purchase history, identifying one or more pieces of merchandise included in the purchase history from the accounting machine and identifying a merchandise item to be associated with the shelf, such that a difference between a predicted value and an observed value is minimized, the predicted value being for the number of pieces of merchandise purchased and being based on the action of picking up a piece of merchandise.

FIG.1

| SHELF 20a | SHELF 20b | SHELF 20c |
|---|---|---|
| 0 | 0 | 3 |
| 2 | 1 | 2 |
| 3 | 0 | 0 |
| ... | | |

| VEGE-TABLE | MEAT | BEVER-AGE | LIQ-UOR |
|---|---|---|---|
| 3 | 2 | 1 | 3 |
| 10 | 5 | 2 | 3 |
| 4 | 4 | 3 | 0 |
| ... | | | |

Processed by Luminess, 75001 PARIS (FR)

**Description**

FIELD

The embodiment discussed herein is related to an information processing program.

BACKGROUND

In recent years, purchasing behaviors of customers are analyzed using videos from cameras installed in stores.

Analyzing the purchasing behaviors of the customers on the basis of the videos from the cameras enables: detection of any shoplifting; and support for customer service, for example. For example, in a case where it has been identified that a customer picked up two pieces of a "cosmetic item" from a shelf but there is only one piece of the "cosmetic item" in the shopping basket at the time of payment, shoplifting is detected. Furthermore, in a case where it has been identified that a customer moved to the "bed" sales floor after looking at "curtains" for a while and a store employee started talking to and serving the customer on the "bed" sales floor, customer service may be supported by recommendation of suggestions related to "curtains" to that store employee.

In analyzing the purchasing behaviors of the customers, identifying merchandise information on each store shelf on the basis of the videos from the cameras is important. For example, in a conventional technique, an image database is prepared beforehand, the image database having images of merchandise and identification information on the merchandise associated with each other, and matching between an image of a piece of merchandise included in a video from a camera and the images of the merchandise in the image database is performed for identification of a merchandise item placed on a store shelf.

Non-Patent Literature: Hayato Akatsuka, Issei Nakamura, and Seung Myeong Koh, "Store Shelf Analysis Solution Using Image Recognition", NTT DOCOMO, INC.

Non-Patent Literature 2: NEC Corporation, "Sales Floor Information Image Analysis Solution and Service", [online], [searched on January 28, 2022], URL: https://jpn.nec.com/process/marketing/iasl4sa.html

However, the above described conventional technique has a problem of not being able to identify merchandise items on the basis of videos from cameras.

For example, images of merchandise in videos from surveillance cameras installed in standard stores are often low in resolution and matching these images against merchandise images in image databases is difficult.

Accordingly, it is an object in one aspect of an embodiment of the present invention to provide an information processing program, an information processing method, and an information processing apparatus that enable merchandise items on store shelves to be identified.

SUMMARY

An information processing program causes a computer to execute a process including: identifying, from a video of an area including a shelf where merchandise in a store is placed, an action of a specific user picking up a piece of merchandise from the shelf, the specific user being one of plural persons; identifying, from a video of an area including an accounting machine in the store, each of the specific user and the accounting machine; storing information on the specific user and information on the accounting machine into a storage in association with each other; receiving a purchase history transmitted from the accounting machine that has been associated with the specific user; identifying one or more pieces of merchandise included in the purchase history from the accounting machine; and identifying, based on a number of the pieces of merchandise identified and the number of times the action of the specific user picking up a piece of merchandise has been performed, the specific user having been associated with the accounting machine, a merchandise item to be associated with the shelf, such that a difference between a predicted value and an observed value is minimized, the predicted value being for the number of pieces of merchandise purchased and being based on the action of picking up a piece of merchandise.

BRIEF DESCRIPTION OF DRAWINGS

FIG. 1 is a diagram for explanation of processing by an information processing apparatus according to an embodiment;
FIG. 2 is a diagram illustrating an example of a merchandise image low in resolution;
FIG. 3 is a diagram for explanation of first processing of identifying merchandise placed on shelves;

FIG. 4 is a diagram for explanation of third processing of identifying merchandise placed on shelves;

FIG. 5 is a diagram illustrating a system according to the embodiment;

FIG. 6 is a functional block diagram illustrating a configuration of the information processing apparatus according to the embodiment;

FIG. 7 is a diagram illustrating an example of a data structure of shelf information;

FIG. 8 is a diagram illustrating an example of a data structure of register information;

FIG. 9 is a diagram illustrating an example of a data structure of a behavior DB;

FIG. 10 is a diagram for explanation of a second detecting method;

FIG. 11 is a flowchart illustrating detection processing by the information processing apparatus according to the embodiment;

FIG. 12 is a flowchart illustrating identification processing by the information processing apparatus according to the embodiment; and

FIG. 13 is a diagram illustrating an example of a hardware configuration of a computer that implements functions that are the same as those of the information processing apparatus according to the embodiment.

DESCRIPTION OF EMBODIMENT

An embodiment of an information processing program, an information processing method, and an information processing apparatus will hereinafter be described in detail on the basis of the drawings. The present invention is not limited by this embodiment.

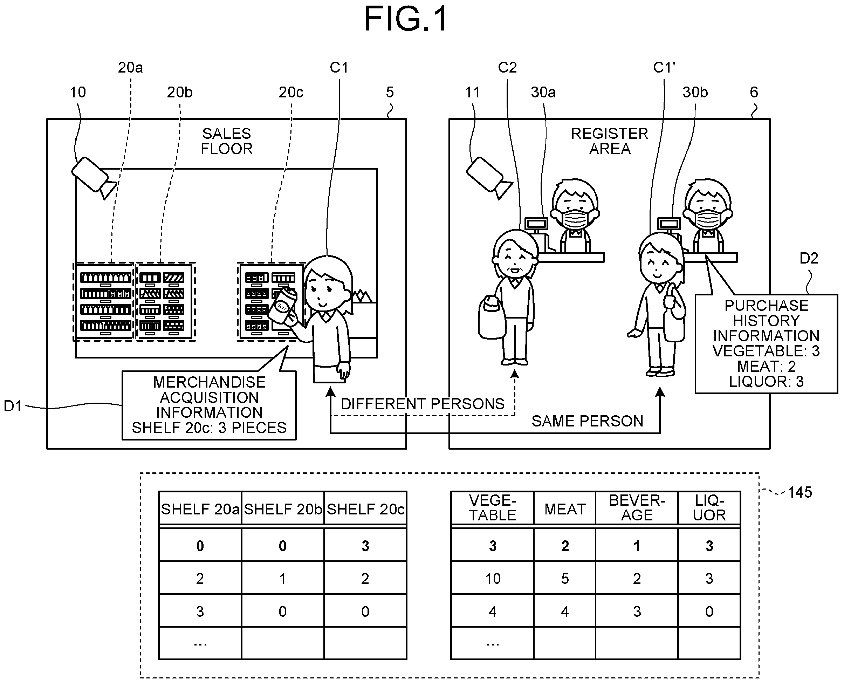

FIG. 1 is a diagram for explanation of processing by an information processing apparatus according to an embodiment. For example, as illustrated in FIG. 1, a sales floor 5 has, arranged thereon, a camera 10 and shelves 20a, 20b, and 20c where merchandise is placed. A register area 6 has, arranged therein, a camera 11 and registers 30a and 30b. The shelves 20a to 20c will hereinafter be collectively referred to as "shelves 20", as appropriate. The registers 30a and 30b will be collectively referred to as "registers 30".

The information processing apparatus identifies any action of a specific user picking up a piece of merchandise from a shelf 20, by analyzing a video from the camera 10, and generates merchandise acquisition information D1. The merchandise acquisition information D1 includes information associating between: information (such as a shelf number) identifying the shelf 20; and the number of times a piece of merchandise has been acquired. For example, in a case where a user C1 has picked up three pieces of merchandise from the shelf 20c, information, "shelf 20c: 3 pieces", is set in the merchandise acquisition information D1. Furthermore, the information processing apparatus extracts person feature information on the user C1.

By analyzing a video from the camera 11, the information processing apparatus identifies a person identical to the user C1, from plural users in the register area 6 included in the video from the camera 11. The information processing apparatus identifies that the user C1 and a user C1' are the same person and the user C1 and a user C2 are different persons, by matching the person feature information on the user C1 against person feature information on the user C1' and person feature information on the user C2.

The information processing apparatus obtains purchase history information D2 from a register 30 in response to the user C1' making payment at that register 30. The purchase history information D2 includes information associating between each merchandise item and the number of purchased pieces of merchandise of that merchandise item. For example, as illustrated in FIG. 1, the user C1' has made payment for merchandise at the register 30b and the number of packages of vegetables purchased is "3", the number of packages of meat purchased is "2", the number of units of beverages purchased is "1", and the number of units of liquor purchased is "3". In this case, information, "vegetable: 3, meat: 2, beverages: 1, liquor: 3", is set in the purchase history information D2.

The information processing apparatus registers the merchandise acquisition information D1 on the user C1 and the purchase history information D2 on the user C1' who is the same person as the user C1, into a record database (DB) 145, in association with each other. For example, the merchandise acquisition information D1 and purchase history information D2 described above with respect to FIG. 1 and related to the user C1 correspond to the first record in the record DB 145. The information processing apparatus repeatedly executes the above described processing for plural users and registers each relation between merchandise acquisition information D1 and purchase history information D2, into the record DB 145.

By using information stored in the record DB 145, the information processing apparatus statistically associates between the shelves 20 and merchandise items. That is, the information processing apparatus identifies merchandise items associated with the shelves 20 as merchandise placed on the shelves 20.

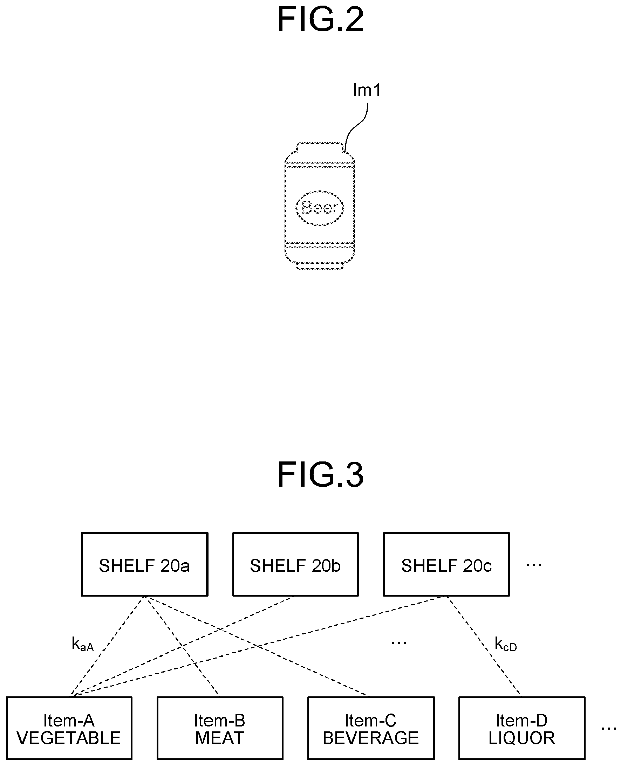

For example, in the conventional technique, an image from a camera is matched against predetermined images of merchandise and identifying a piece of merchandise is thus not possible when the image of the piece of merchandise is low in resolution. FIG. 2 is a diagram illustrating an example of a merchandise image low in resolution. An image Im1 illustrated in FIG. 2 is an image of a can of beer but the image is low in resolution and identifying whether or not this image matches a predetermined image of merchandise that has been prepared beforehand is thus difficult. For example, the degrees of match with images of various cans included in an image database would thus become similar, the images being other than those of cans of beer, and identifying the image Im1 as that of a can of beer is thus not possible.

In contrast, by analyzing a video from the camera 10, the information processing apparatus according to the embodiment identifies any action of a specific user picking up a piece of merchandise from a shelf 20 and generates merchandise acquisition information D1. Identifying, from an image, the action of picking up a piece of merchandise is possible even if the image is low in resolution. Furthermore, the information processing apparatus statistically associates between the shelves 20 and merchandise items by using relations between the merchandise acquisition information D1 and purchase history information D2 obtained from the registers 30. Merchandise placed on the shelves 20 is thereby able to be identified. An information processing apparatus 100 identifies a merchandise item to be associated with a shelf such that a difference is minimized, the difference being between: a predicted value of the number of pieces of merchandise purchased, the predicted value being based on the user's action of picking up merchandise; and an observed value.

First processing to third processing, by the information processing apparatus according to the embodiment, of statistically identifying, on the basis of information stored in the record DB 145, merchandise placed on the shelves 20 will be specifically described next. The information processing apparatus may execute any of the following first processing to third processing.

The first processing of identifying merchandise placed on the shelves 20 will be described first. In this first processing, it is presumed that the camera 10 for detecting any action of a user picking up a piece of merchandise covers the entire sales floor and makes no false-negative detection and false-positive detection.

FIG. 3 is a diagram for explanation of the first processing of identifying merchandise placed on shelves. FIG. 3 illustrates the shelves 20a to 20c but any other shelf may also be included. Furthermore, FIG. 3 illustrates an item-A (vegetable), an item-B (meat), an item-C (beverage), and an item-D (liquor), but any other merchandise item may be included. The information processing apparatus sets a variable k according to a combination of a shelf and a merchandise item. A variable (or an unknown number) corresponding to "a shelf x" and "a merchandise item Y" is denoted by "a variable $k_{xY}$". For example, a variable $k_{aA}$ in FIG. 3 is a variable corresponding to the shelf 20a and the item-A (vegetable).

Equation (1) holds for the number of shelves M, the number of merchandise items N, and a user 1. In Equation (1), $t_i^{(1)}$ represents the number of pieces of merchandise picked up by the user 1 from a shelf i. Furthermore, $p_j^{(1)}$ represents the number of pieces of merchandise of a merchandise item j purchased by the user 1.

$$
\left.
\begin{aligned}
k_{aA} \cdot t_a^{(l)} + k_{bA} \cdot t_b^{(l)} + \cdots + k_{iA} \cdot t_i^{(l)} + \cdots &= p_A^{(l)} \\
k_{aB} \cdot t_a^{(l)} + k_{bB} \cdot t_b^{(l)} + \cdots + k_{iB} \cdot t_i^{(l)} + \cdots &= p_B^{(l)} \\
\vdots \\
k_{aj} \cdot t_a^{(l)} + k_{bj} \cdot t_b^{(l)} + \cdots + k_{ij} \cdot t_i^{(l)} + \cdots &= p_j^{(l)} \\
\vdots
\end{aligned}
\right\}
\qquad (1)
$$

In Equation (1), the number of unknown numbers is $M \times N$ and N equations are set per user. Therefore, from data (merchandise acquisition information D1 and purchase history information D2) on M users, solutions (variables k) are able to be calculated. On the basis of a variable k having a value equal to or larger than a threshold, the variable k being from plural variables k, the information processing apparatus identifies a merchandise item placed on a shelf 20. For example, in a case where the variable $k_{aA}$ corresponding to the shelf 20a and item-A (vegetable) is equal to or larger than the threshold, the information processing apparatus identifies "vegetable" as a merchandise item placed on the shelf 20a.

In the first processing, because the values of the variables k become 0 or 1, the information processing apparatus identifies a merchandise item placed on a shelf 20 on the basis of a variable k having the value, 1.

As described above, in a case where the camera 10 covers the entire sales floor and there is no false-negative detection and false-positive detection of merchandise pickup based on a video from the camera 10, the information processing apparatus is able to identify merchandise items placed on the shelves 20 by executing the first processing.

The second processing of identifying merchandise placed on the shelves 20 will be described next. In this second processing, it is presumed that the camera 10 for detecting any action of a user picking up a piece of merchandise covers the entire sale floor but may make false-negative detection and/or false-positive detection. In a case where false-negative detection and/or false-positive detection are/is made, $t_i^{(1)}$ may be incorrect.

Equation (1) is a linear equation and thus may be expressed as Equation (2) below. In Equation (2), $T^{(1)}$ is a matrix of $(N, N \times M)$ having $t_i^{(l)}$ as an element. Furthermore, k is expressed by $k = (k_{aA}, k_{bA}, k_{cA}, ...)$ and the number of dimensions thereof is N × M. In addition, $p^{(1)}$ is expressed by $p^{(1)} = (p_A^{(1)}, p_B^{(1)}, p_C^{(1)}, ...)$ and the number of dimensions thereof is N.

$$T^{(l)}k = p^{(l)} \qquad\qquad (2)$$

The information processing apparatus obtains the relation expressed by Equation (2) by combining data (merchandise acquisition information D1 and purchase history information D2) on L users (where L > M). In a case where $t_i^{(l)}$ set on the basis of the merchandise acquisition information D1 has an error, Equation (2) has no solution. Therefore, the information processing apparatus calculates approximate solutions of variables k on the basis of Equation (3). However, constraints, "each $k_{aA} \geq 0$, $k_{bA} \geq 0$, $k_{cA} \geq 0$, ...", are set.

$$k^* = \text{aug} \min_k \|Tk - p\|^2 \qquad\qquad (3)$$

As expressed by Equation (3), the information processing apparatus calculates (searches for) any variable k for which the difference between T × k and p is minimized. On the basis of a variable k having a value equal to or larger than a threshold, the variable k being from the variables k that have been calculated, the information processing apparatus identifies a merchandise item placed on a shelf 20. For example, in a case where the variable $k_{aA}$ corresponding to the shelf 20a and item-A (vegetable) is equal to or larger than the threshold, the information processing apparatus identifies "vegetable" as a merchandise item placed on the shelf 20a.

As described above, even if there is a possibility of false-negative detection and/or false-positive detection of merchandise pickup based on a video from the camera 10, as long as the camera 10 covers the entire sales floor, the information processing apparatus is able to identify merchandise items placed on the shelves 20 by executing the second processing.

The third processing of identifying merchandise items placed on the shelves 20 will be described next. In this third processing, it is presumed that the camera 10 for detecting any action of a user picking up a piece of merchandise does not entirely cover a sale floor and may make false-negative detection and/or false-positive detection. In a case where false-negative detection and/or false-positive detection are/is made, $t_i^{(1)}$ may be incorrect.

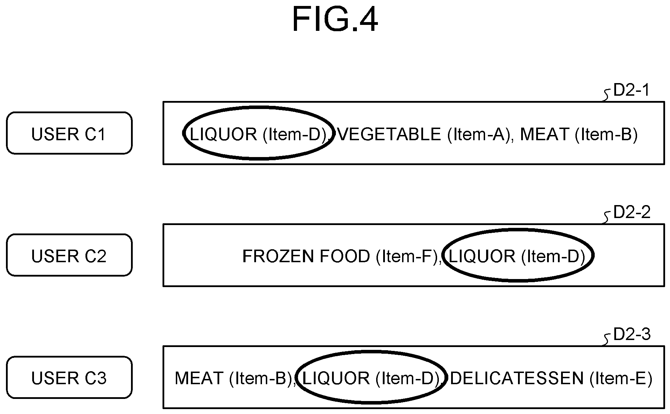

FIG. 4 is a diagram for explanation of the third processing of identifying merchandise items placed on shelves. On the basis of merchandise acquisition information D1 and purchase history information D2 on each user, the information processing apparatus detects, by data mining, any merchandise item commonly purchased by plural users who have respectively picked up pieces of merchandise from the same shelf 20, and identifies the merchandise item placed on the shelf 20.

In an example illustrated in FIG. 4, the user C1 has acquired pieces of merchandise from plural shelves 20 including the shelf 20a, the user C2 has acquired pieces of merchandise items from plural shelves 20 including the shelf 20a, and a user C3 has picked up pieces of merchandise from plural shelves 20 including the shelf 20a. In this case, the users C1 to C3 are users who have in common that they have all acquired pieces of merchandise from the shelf 20a.

For example, purchase history information D2-1 on the user C1 includes a history of purchase of liquor, a vegetable, and meat. Purchase history information D2-2 on the user C2 includes a history of purchase of frozen food and liquor. Purchase history information D2-3 on the user C3 includes a history of purchase of meat, liquor, and delicatessen. The information processing apparatus compares the purchase history information D2-1, D2-2, and D2-3 with one another, and identifies the common merchandise item, "liquor", as the merchandise item placed on the shelf 20a. In the above processing, a merchandise item X satisfying Equation (4) described later may be found by using data (merchandise acquisition information D1 and purchase history information D2) on L users.

For example, the third processing may be formulated by Equation (4) below. Equation (4) is an equation related to a shelf i and thus M of these Equations (4) are available, where M is the number of shelves. In Equation (4), $t_i^{(l)}$ is the number of pieces of merchandise acquired from a shelf i by a user 1. Furthermore, $p_x^{(1)}$ is the number of pieces of merchandise of the merchandise item X purchased by the user 1.

$$X^* = \text{aug} \min_X \sum_l \left\{ s\left(t_i^{(l)}\right) - s\left(p_X^{(l)}\right) \right\}^2 \qquad\qquad (4)$$

Equation (5) below represents s(x) included in Equation (4). When x is equal to or larger than 1, s(x) becomes 1.

$$s(x) = \begin{cases} 1 (\text{if } x \geq 1) \\ 0 (\text{otherwise}) \end{cases} \qquad (5)$$

If the user 1 has picked up a piece of merchandise from the shelf i once or more, $s(t_i^{(1)}) = 1$, and if not, $s(t_i^{(1)}) = 0$.

If the user 1 has purchased one or more pieces of merchandise of the merchandise item X, $s(p_x^{(1)}) = 1$, and if not, $s(p_x^{(1)}) = 0$.

The value of "$s(t_i^{(1)}) - s(p_x^{(1)})$" included in Equation (4) becomes 0 if the combination is correct and becomes 1 if the combination is incorrect. The information processing apparatus identifies X as a merchandise item most likely to be correct, this X minimizing the sum of these values for all users.

As described above, even if there is a possibility of false-negative detection and/or false-positive detection of merchandise pickup based on a video from the camera 10 and the camera 10 does not entirely cover the sales floor, the information processing apparatus is able to identify merchandise items placed on the shelves 20 by executing the third processing.

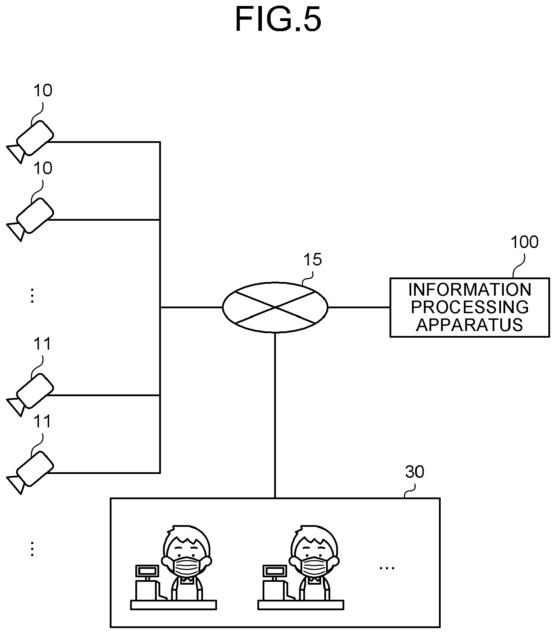

An example of a system according to the embodiment will be described next. FIG. 5 is a diagram illustrating the system according to the embodiment. As illustrated in FIG. 5, this system has cameras 10, cameras 11, registers 30, and the information processing apparatus 100. The cameras 10, the cameras 11, and the registers 30 are connected to one another via a network 15.

The cameras 10 are cameras that capture videos of shelves 20 installed on the sales floor 5 described by reference to FIG. 1. The cameras 10 transmit information on the videos captured, to the information processing apparatus 100.

The cameras 11 are cameras that capture videos of the register area 6 described by reference to FIG. 1. The registers 30 are included in a shooting range of the cameras 11. The cameras 11 transmit information on the videos captured, to the information processing apparatus 100.

In a case where a user has made payment at a register 30, that register 30 generates purchase history information D2 and transmits the purchase history information D2 to the information processing apparatus 100. The purchase history information D2 may have information assigned thereto, the information identifying the register 30. When the register 30 accepts start of payment processing from a store employee or the user, the register 30 transmits payment start information to the information processing apparatus 100. A register number that identifies the register 30 is set in the payment start information.

By executing the processing described above by reference to FIG. 1 and FIG. 4, the information processing apparatus 100 identifies merchandise items placed on the shelves 20. An example of a configuration of the information processing apparatus 100 will be described hereinafter.

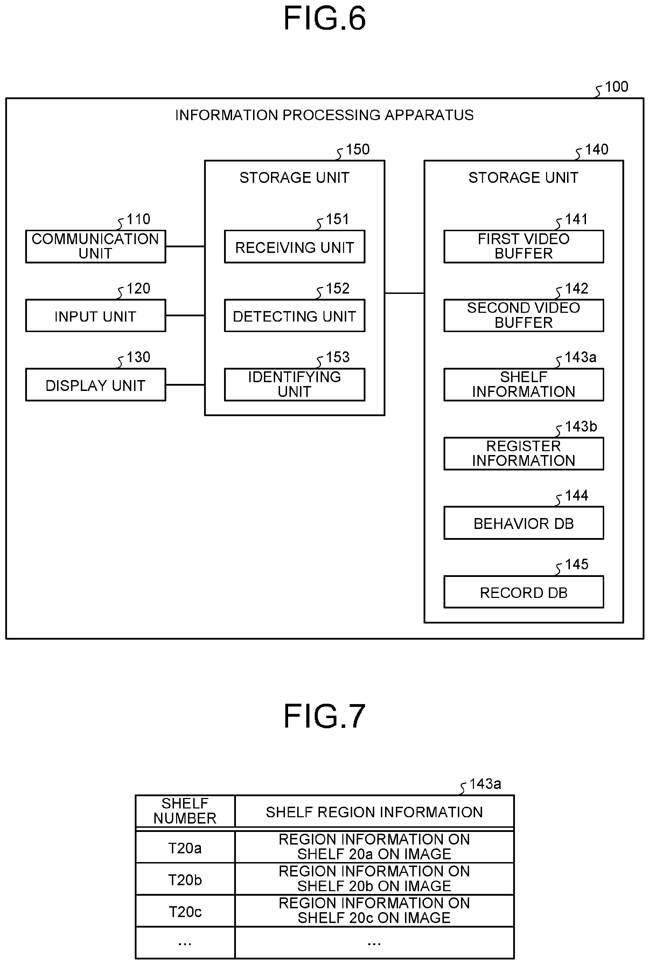

FIG. 6 is a functional block diagram illustrating a configuration of the information processing apparatus according to the embodiment. As illustrated in FIG. 6, this information processing apparatus 100 has a communication unit 110, an input unit 120, a display unit 130, a storage unit 140, and a control unit 150.

The communication unit 110 transmits and receives information to and from the cameras 10 and 11 and the registers 30, via the network 15. For example, the communication unit 110 is implemented by, for example, a network interface card (NIC).

The input unit 120 is implemented by use of an input device, such as a keyboard and a mouse, and inputs various types of information to the control unit 150 correspondingly to input operations by an operator.

The display unit 130 is implemented by, for example, a display device, such as a liquid crystal display. For example, the display unit 130 may display the merchandise items placed on the shelves 20, the merchandise items having been identified by the control unit 150.

The storage unit 140 has a first video buffer 141, a second video buffer 142, shelf information 143a, register information 143b, the behavior DB 144, and the record DB 145. The storage unit 140 is implemented by, for example: a semiconductor memory element, such as a flash memory; or a storage device, such as a hard disk or an optical disk.

The first video buffer 141 is a buffer that holds therein information on videos received from the cameras 10 installed on the sales floor 5. The information on the videos received from the cameras 10 will hereinafter be referred to as "first video information". The first video information includes a time series of images (still images).

The second video buffer 142 is a buffer that holds therein information on videos received from the cameras 11 installed in the register area 6. The information on the videos received from the cameras 11 will hereinafter be referred to as "second video information". The second video information includes a time series of images (still images).

The shelf information 143a is information indicating regions of the shelves 20 on the images (first video information) captured by the cameras 10. FIG. 7 is a diagram illustrating an example of a data structure of shelf information. As illustrated in FIG. 7, the shelf information 143a has shelf numbers and shelf region information associated with each other. The shelf numbers are numbers that uniquely identify the shelves 20 respectively. For example, shelf numbers T20a, T20b, and T20c respectively correspond to the shelves 20a, 20b, and 20c. The shelf region information is information indicating the regions of the shelves 20 on the images (first video information). For example, the shelf region information has two-dimensional coordinates of top left edges of the shelves 20 and two-dimensional coordinates of bottom right edges of the shelves 20.

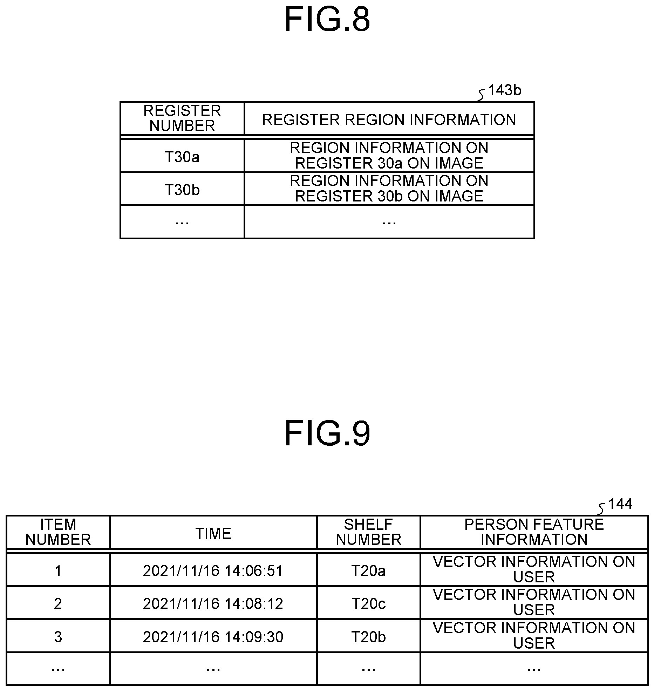

The register information 143b is information indicating regions of the registers 30 on the images (second video information) captured by the cameras 11. FIG. 8 is a diagram illustrating an example of a data structure of register information. As illustrated in FIG. 8, the register information 143b has register numbers and register region information associated with each other. The register numbers are numbers that uniquely identify the registers 30 respectively. For example, register numbers T30a and T30b respectively correspond to the registers 30a and 30b. The register region information is information indicating the regions of the registers 30 on the images (second video information). For example, the register region information has two-dimensional coordinates of top left edges of the registers 30 and two-dimensional coordinates of bottom right edges of the registers 30.

The behavior DB 144 holds therein various types of information obtained when actions of users picking up pieces of merchandise from the shelves 20 are identified on the basis of the first video information. FIG. 9 is a diagram illustrating an example of a data structure of a behavior DB. As illustrated in FIG. 9, this behavior DB 144 has item numbers, times, shelf numbers, and person feature information, in association with one another.

The item numbers are numbers that identify records in the behavior DB 144 respectively. The times are times at which the actions of the users picking up the pieces of merchandise from the shelves 20 were identified. The shelf numbers are numbers that uniquely identify the shelves 20 respectively. The person feature information is vector information indicating features of the users who have picked up the pieces of merchandise. For example, the person feature information is 512-dimensional vector information obtained by Person Re-Identification, for example.

As described by reference to FIG. 1, the record DB 145 holds therein information associating between merchandise acquisition information D1 and purchase history information D2. For example, the record DB 145 has, in association with each other: the number of times each user has performed the action of picking up a piece of merchandise from a shelf 20; and the number of pieces of merchandise purchased by each user for each merchandise item.

Reference will now be made to FIG. 6 again. The control unit 150 has a receiving unit 151, a detecting unit 152, and an identifying unit 153. The control unit 150 is implemented by a central processing unit (CPU) or a micro processing unit (MPU). Furthermore, the control unit 150 may be implemented by, for example, an integrated circuit, such as an application specific integrated circuit (ASIC) or a field programmable gate array (FPGA).

The receiving unit 151 receives the first video information from the cameras 10. The receiving unit 151 stores the first video information into the first video buffer 141.

The receiving unit 151 receives the second video information from the cameras 11. The receiving unit 151 stores the second video information into the second video buffer 142. The receiving unit 151 may start receiving the second video information when the identifying unit 153 described later receives payment start information from a register 30.

The detecting unit 152 detects, on the basis of the first video information stored in the first video buffer 141, any action of a user picking up a piece of merchandise. In a case where the detecting unit 152 detects the action of a user picking up a piece of merchandise, the detecting unit 152 registers a time, a shelf number of the shelf 20 from which the piece of merchandise was picked up, and person feature information on the user, in association with one another, into the behavior DB 144. The detecting unit 152 obtains information on the time from a timer, for example.

An example of processing by the detecting unit 152 will be described below, the processing being processing of detecting any action of a user picking up a piece of merchandise. A first detecting method and a second detecting method will be described hereinafter. By using the first detecting method or the second detecting method, the detecting unit 152 detects any action of a user picking up a piece of merchandise.

The first detecting method will be described below. By using human object interaction detection (HOID), the detecting unit 152 detects any action of a user picking up a piece of merchandise. HOID is a technique for recognizing, on the basis of a moving image (first video information) serving as an input, an interaction between a user and an object. For example, by using a trained model (HOID) that has been trained by use of training data having inputs that are video information on the shelves 20 and outputs indicating whether or not pieces of merchandise were picked up, the detecting unit 152 detects any action of a user picking up a piece of merchandise.

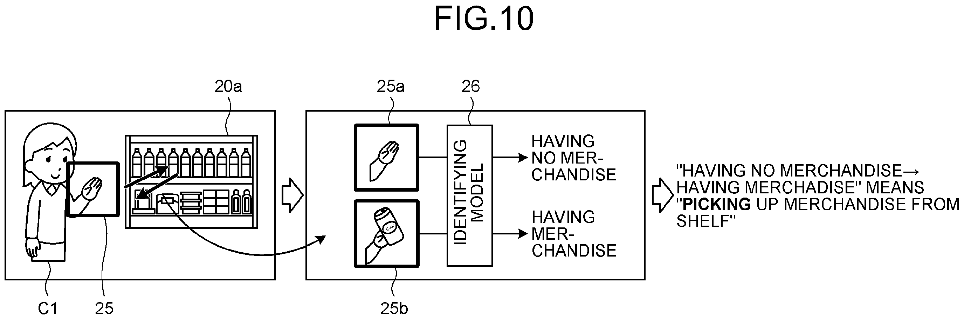

The second detecting method will be described below. FIG. 10 is a diagram for explanation of the second detecting method. The detecting unit 152 analyzes the first video information and obtains posture information on a target, the user C1. The posture information preferably includes a region including a hand of the user C1. The detecting unit 152 detects when the hand of the user C1 enters or approaches the region of the shelf 20a on an image. The shelf number and shelf region information related to the region of the shelf 20a have been registered in the shelf information 143a, and the detecting unit 152 thus uses that shelf region information.

For example, as illustrated in FIG. 10, it is assumed that a region near the shelf 20a is a "region 25". An image of the region 25 at the time when the user C1 reaches out her hand to the shelf 20a is assumed to be an image 25a. An image of the region 25 at the time when the user C1 returns her hand from the shelf 20a is assumed to be an image 25b. By using an identifying model 26, the detecting unit 152 determines whether or not the user C1 has a piece of merchandise in her hand. The identifying model 26 is a model that identifies whether or not a piece of merchandise is present in the hand of a user and may be the above mentioned trained model based on HOID.

In a case where the image 25a is input to the identifying model 26 and is identified as "having no merchandise" and the image 25b is input to the identifying model 26 and is identified as "having merchandise", the detecting unit 152 detects that the user C1 has performed the action of picking up a piece of merchandise.

In a case where the image 25a is input to the identifying model 26 and is identified as "having merchandise" and the image 25b is input to the identifying model 26 and is identified as "having no merchandise", the detecting unit 152 detects that the user C1 has performed the action of returning a piece of merchandise. In a case where the detecting unit 152 detects that the user C1 has performed the action of returning a piece of merchandise within a predetermined time period from detection of the user C1 performing the action of picking up a piece of merchandise, the detecting unit 152 invalidates that immediately preceding detection related to the action of the user C1 picking up a piece of merchandise.

In a case where the detecting unit 152 has detected, by using the above described first detecting method or second detecting method, the action of the user C1 picking up a piece of merchandise, the detecting unit 152 extracts person feature information on the user C1, the person feature information being included in the first video information.

For example, in a case where the detecting unit 152 extracts person feature information, the detecting unit 152 uses a trained model based on Person Re-Identification. When the first video information is input to the trained model based on Person Re-Identification, feature information on the user C1 included in the first video information is output as a high-dimensional vector. That is, by inputting the first video information into the trained model based on Person Re-Identification, the detecting unit 152 obtains person feature information on the user C1.

Separately from the above described processing, the detecting unit 152 may extract person feature information from the first video information by the following method. For example, the detecting unit 152 may detect belongings (for example, a bag, a headwear, and glasses) of a user by an object detection technique and use the detected belongings as person feature information. The detecting unit 152 may estimate attributes (gender and age) of a user from the first video information and use the estimated attributes as person feature information. The detecting unit 152 may add information on any accompanying person (for example, a group of three) or feature values of any accompanying person, to person feature information on a user. The detecting unit 152 performs determination related to any accompanying person on the basis of, for example, similarity between their movement loci and/or their interaction with the same shopping basket or cart.

Every time the detecting unit 152 detects any action of a user picking up a piece of merchandise, the detecting unit 152 repeats the above described processing and registers a time at which the action of picking up the piece of merchandise was detected, a shelf number of the shelf 20 from which the piece of merchandise was picked up, and person feature information on the user, in association with one another, into the behavior DB 144.

Reference will now be made to FIG. 6 again. The identifying unit 153 performs the following processing to identify merchandise items placed on the shelves 20. The identifying unit 153 may output relations between the shelves 20 and the merchandise items to the display unit 130 and cause the display unit 130 to display the relations, or may notify a specified external device of the relations.

In a case where the identifying unit 153 has obtained payment start information from a register 30, the identifying unit 153 identifies, on the basis of the register number set in the payment start information and the register information 143b, register region information on the register 30 where payment was started.

The identifying unit 153 obtains the second video information from the time at which the payment start information was obtained from the register 30, from the second video buffer 142, detects a user positioned in the vicinity of the register region of the register 30, and extracts person feature information on the detected user. The register 30 where payment was started and the person feature information on the user performing the payment are thereby associated with each other. The identifying unit 153 may register the register number of the register 30 where the payment was started and the person feature information on the user performing the payment at that register 30, into the storage unit 140, in association with each other. The identifying unit 153 excludes a preset region where a store employee is positioned, from a detection range for the user.

The identifying unit 153 obtains person feature information on a user positioned in the vicinity of a register 30 by inputting the second video information into a trained model based on Person Re-Identification. The above description also applies to this trained model based on Person Re-Identification. The person feature information on the user positioned in the vicinity of the register 30 identified on the basis of the second video information will hereinafter be referred to as "query feature information".

The identifying unit 153 calculates a similarity (cosine similarity) between query feature information and each set of person feature information stored in the behavior DB 144 and identifies any record having a similarity equal to or larger than a predetermined similarity. The identifying unit 153 performs classification of the identified records by shelf number; identifies, on the basis of results of this classification, the number of times a piece of merchandise was picked up from each shelf; and generates merchandise acquisition information D1. For example, in a case where there are three records for the shelf number, "T20c", the identifying unit 153 sets the number of times of acquisition of a piece of merchandise corresponding to the shelf number, "T20c" to "3".

The identifying unit 153 receives purchase history information D2 from the register 30 and registers the purchase history information D2 and the merchandise acquisition information D1 into the record DB 145, in association with each other. The identifying unit 153 may associate the purchase history information D2 and the merchandise acquisition information D1 with each other on the basis of the register number set in the payment start information described above and the register number set in the purchase history information D2.

By repeatedly executing the above described processing, the identifying unit 153 registers plural pairs of sets of merchandise acquisition information D1 and sets of purchase history information D2, into the record DB 145.

Subsequently, the identifying unit executes any of the above described first processing to the third processing of identifying merchandise items placed on the shelves 20.

In a case where the identifying unit 153 executes the first processing, the identifying unit 153 uses Equation (1). The identifying unit 153 sets $t_i^{(1)}$ and $p_j^{(1)}$ in Equation (1) from the relations between the merchandise acquisition information D1 and purchase history information D2 set in the record DB 145 and calculates values of variables k. On the basis of a variable k having a value equal to or larger than a threshold, the variable k being from plural variables k, the identifying unit 153 identifies a merchandise item placed on a shelf 20.

In a case where the identifying unit 153 executes the second processing, the identifying unit 153 uses Equation (3). The identifying unit 153 sets $T^{(1)}$ and $p^{(1)}$ in Equation (3) from the relations between the merchandise acquisition information D1 and purchase history information D2 set in the record DB 145 and calculates approximate solutions for variables k. On the basis of a variable k having a value equal to or larger than a threshold, the variable k being from plural variables k, the identifying unit 153 identifies a merchandise item placed on a shelf 20.

In a case where the identifying unit 153 executes the third processing, the identifying unit 153 detects, by data mining, any merchandise item commonly purchased by plural users who have picked up pieces of merchandise from the same shelf 20 and identifies the merchandise item placed on the shelf 20. For example, on the basis of Equation (4) and Equation (5), the identifying unit 153 searches for a merchandise item X for which the value of Equation (4) is minimized, and identifies that merchandise item X as a merchandise item that is most likely to be correct.

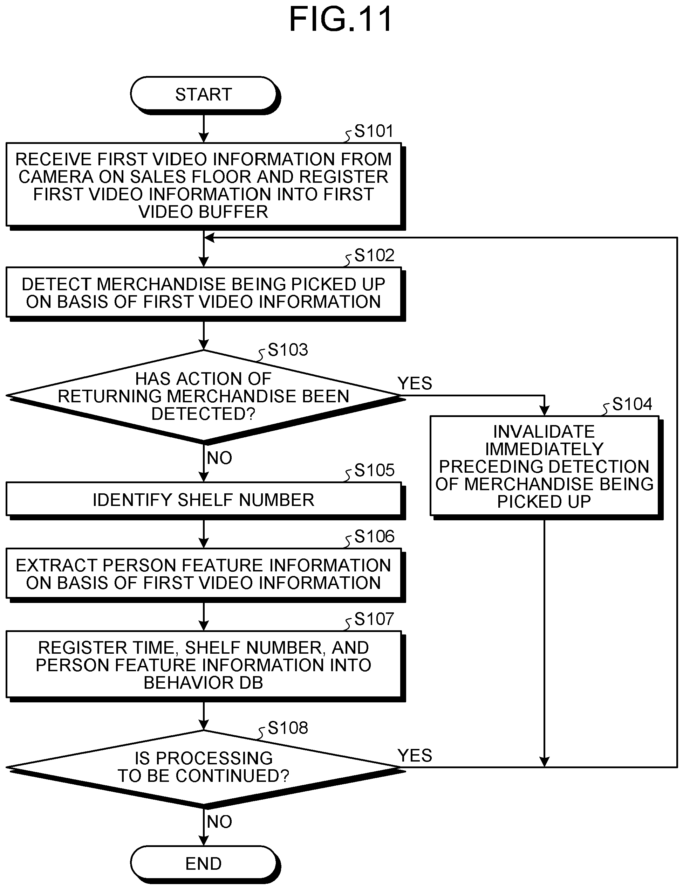

An example of a processing procedure by the information processing apparatus 100 according to the embodiment will be described next. FIG. 11 is a flowchart illustrating detection processing by the information processing apparatus according to the embodiment. As illustrated in FIG. 11, the receiving unit 151 of the information processing apparatus 100 receives first video information from one or more cameras 10 on the sales floor 5 and registers the first video information into the first video buffer 141 (Step S101).

On the basis of the first video information, the detecting unit 152 of the information processing apparatus 100 detects pieces of merchandise being picked up (Step S102). In a case where the detecting unit 152 has detected any action where a piece of merchandise is returned (Step S103, Yes), the detecting unit 152 invalidates the immediately preceding detected pickup of a piece of merchandise (Step S104) and proceeds to Step S102 again.

On the contrary, in a case where the detecting unit 152 has not detected any action where a piece of merchandise is returned (Step S103, No), the detecting unit 152 proceeds to Step S105. The detecting unit 152 identifies a shelf number (Step S105). On the basis of the first video information, the detecting unit 152 extracts person feature information (Step S106).

The detecting unit 152 registers a time, the shelf number, and the person feature information, into the behavior DB 144 (Step S107). In a case where the detecting unit 152 is to continue processing (Step S108, Yes) the detecting unit 152 proceeds to Step S102 again. In a case where the detecting unit 152 is to not continue processing (Step S108, No), the detecting unit 152 ends the detection processing.

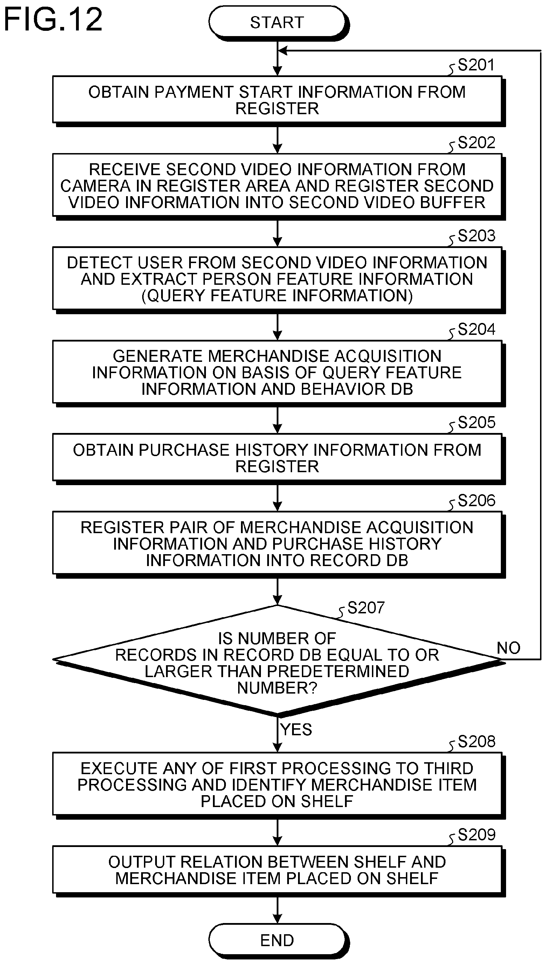

FIG. 12 is a flowchart illustrating identification processing by the information processing apparatus according to the embodiment. As illustrated in FIG. 12, the identifying unit 153 of the information processing apparatus 100 obtains payment start information from a register 30 (Step S201). The receiving unit 151 of the information processing apparatus 100 receives second video information from a camera 11 in the register area 6 and registers the second video information into the second video buffer 142 (Step S202).

The identifying unit 153 detects a user from the second video information and extracts person feature information (Step S203). On the basis of query feature information and the behavior DB 144, the identifying unit 153 generates merchandise acquisition information D1 (Step S204).

The identifying unit 153 obtains purchase history information D2 from the register 30 (Step S205). The identifying unit 153 registers a pair of the merchandise acquisition information D1 and the purchase history information D2, into the record DB 145 (Step S206).

In a case where the number of records in the record DB 145 is not equal to or larger than a predetermined number (Step S207, No), the identifying unit 153 proceeds to Step S201. In a case where the number of records in the record DB 145 is equal to or larger than the predetermined number (Step S207, Yes), the identifying unit 153 proceeds to Step S208.

The identifying unit 153 executes any of the first processing to the third processing to identify merchandise items placed on shelves (Step S208). The identifying unit 153 outputs relations between shelves 20 and merchandise items placed on the shelves 20 (Step S209).

Effects of the information processing apparatus 100 according to the embodiment will be described next. By analyzing a video from a camera 10, the information processing apparatus 100 identifies any action of a specific user picking up a piece of merchandise from a shelf 20 and generates merchandise acquisition information D1. By using a relation between the merchandise acquisition information D1 and purchase history information D2 that is obtained from a register 30, the information processing apparatus 100 identifies a merchandise item placed on a shelf 20 such that a difference is minimized, the difference being between a predicted value and an observed value, the predicted value being for the number of pieces of merchandise purchased and being based on the action of picking up. Even if the video from the camera 10 is low in resolution, the merchandise item placed on the shelf 20 is thereby able to be identified.

On the basis of the first processing, the information processing apparatus 100 identifies merchandise items placed on shelves 20. For example, the information processing apparatus 100 sets variables k each related to a combination of a shelf and a predetermined merchandise item, and calculates values of the variables k on the basis of simultaneous equations. In each of these simultaneous equations, a multiplied value equals an observed value (the number of pieces of merchandise purchased), the multiplied value resulting from multiplication of a variable k by a predicted value (a value resulting from multiplication of a variable by the number of times of acquisition of a piece of merchandise). The information processing apparatus 100 identifies a predetermined merchandise item forming a pair with a shelf related to a variable k calculated and having a value equal to or larger than a threshold, the predetermined merchandise item being a merchandise item to be associated with the shelf. Even if the video from the camera 10 is low in resolution, merchandise items placed on the shelves 20 are thereby able to be identified.

On the basis of the second processing, the information processing apparatus 100 identifies merchandise items placed on shelves 20. For example, according to Equation (3), the information processing apparatus 100 calculates a variable vector for which a value resulting from subtraction of an observed value vector from a predicted value vector (a value resulting from multiplication of a variable vector by a matrix having elements that are the numbers of times of acquisition of a piece of merchandise) is minimized, and identifies merchandise items to be associated with shelves, on the basis of values of elements of the variable vector calculated. Even if there is a possibility of false-negative detection and/or false-positive detection of merchandise pickup based on the video from the camera 10, as long as the camera 10 covers the entire sales floor, the merchandise items placed on the shelves are able to be identified by execution of the second processing.

On the basis of the third processing, the information processing apparatus 100 identifies merchandise items placed on shelves 20. For example, on the basis of merchandise acquisition information D1 and purchase history information D2 on each user, the information processing apparatus 100 detects, by data mining, any merchandise item commonly purchased by plural users who have taken out pieces of merchandise from the same shelf 20, and identifies the merchandise item placed on the shelf 20. For example, according to Equation (4), the information processing apparatus 100 identifies, for each shelf, a merchandise item on the shelf such that a difference between a predicted value (presence or absence of merchandise pickup, that is, possibility or impossibility of merchandise purchase) and an observed value (presence or absence of merchandise purchase) is minimized. Even if there is a possibility of false-negative detection and/or false-positive detection of merchandise pickup based on the video from the camera 10 and the camera 10 does not entirely cover the sales floor, the merchandise items placed on the shelves 20 are able to be identified by execution of the third processing.

Furthermore, the information processing apparatus 100 identifies merchandise items placed on shelves 20 by using relations between merchandise acquisition information D1 and purchase history information D2, such that a difference between a predicted value and an observed value is minimized, the predicted value being for the number of pieces of merchandise purchased and being based on the action of picking up. Therefore, identification of the merchandise items placed on the shelves 20 is enabled by processing that is more streamlined than that in a case where merchandise items placed on shelves are identified by analysis of a high resolution video of the shelves.

The above described processing by the information processing apparatus 100 is just an example and the information processing apparatus 100 thus may execute any other processing. Other processing that may be executed by the information processing apparatus 100 will be described hereinafter.

The detecting unit 152 of the information processing apparatus 100 identifies the region of a shelf 20 included in first video information by using shelf information 143a that has been prepared beforehand, but the detecting unit 152 may identify the region of a shelf 20 using a trained model based on, for example, semantic segmentation.

In a case where the identifying unit 153 of the information processing apparatus 100 receives payment start information and generates merchandise acquisition information D1, the identifying unit 153 compares query feature information with all of records that have been registered in the behavior DB 144, but this case is not limited to such comparison. The information processing apparatus 100 may make a comparison with records within the most recent T hours from the time of receipt of the payment start information. Furthermore, the identifying unit 153 may execute person matching by using a camera set up at a doorway of a store, and generate merchandise acquisition information D1 on the basis of records in the behavior DB 144, the records being limited to those corresponding to a time period from entrance of the relevant user to exit of that user from the store.

By using arrangement information on plural cameras set up in a store, the identifying unit 153 of the information processing apparatus 100 may perform tracking of movement of users between the cameras, and associate, on the basis of results of the tracking, between users on the sales floor 5 and users in the register area. By using plural beacons arranged in a store and a receiving terminal, the identifying unit 153 of the information processing apparatus 100 may track positional information on users and associate between users on the sales floor 5 and users in the register area 6.

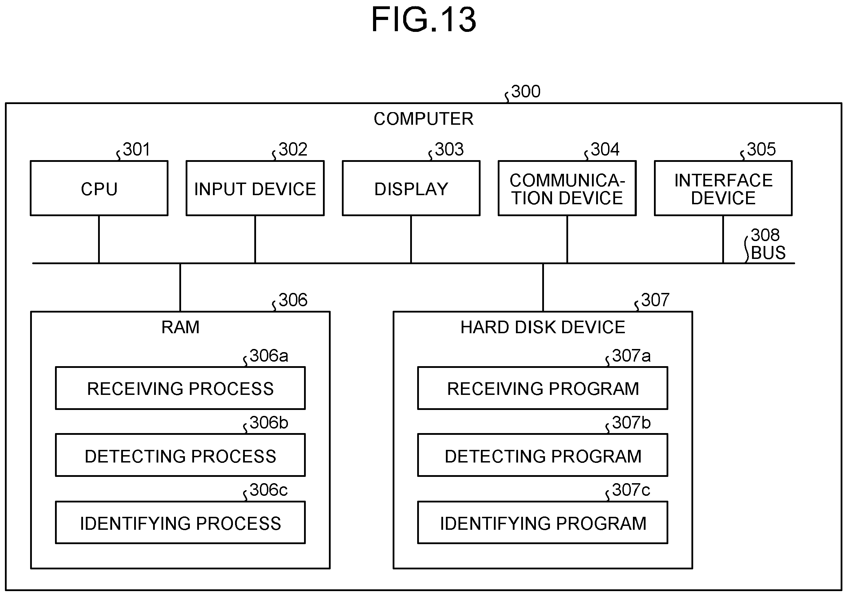

An example of a hardware configuration of a computer that implements functions that are the same as those of the information processing apparatus 100 according to the embodiment will be described next. FIG. 13 is a diagram illustrating an example of a hardware configuration of a computer that implements functions that are the same as those of the information processing apparatus according to the embodiment.

As illustrated in FIG. 13, a computer 300 has a CPU 301 that executes various kinds of arithmetic processing, an input device 302 that receives input of data from a user, and a display 303. Furthermore, the computer 300 has: a communication device 304 that transfers data to and from, for example, an external device; and an interface device 305. The computer 300 also has a RAM 306 that temporarily stores therein various types of information, and a hard disk device 307. Each of these devices 301 to 307 is connected to a bus 308.

The hard disk device 307 has a receiving program 307a, a detecting program 307b, and an identifying program 307c. The CPU 301 reads the programs 307a to 307c and loads the read programs 307a to 307c into the RAM 306.

The receiving program 307a functions as a receiving process 306a. The detecting program 307b functions as a detecting process 306b. The identifying program 307c functions as an identifying process 306c.

Processing in the receiving process 306a corresponds to the processing by the receiving unit 151. Processing in the detecting process 306b corresponds to the processing by the detecting unit 152. Processing in the identifying process 306c corresponds to the processing by the identifying unit 153.

The programs 307a to 307c may be not stored in the hard disk device 307 beforehand. For example, each program may be stored in a "portable physical medium", such as a flexible disk (FD), a CD-ROM, a DVD, a magneto-optical disk, or an IC card, which is inserted into the computer 300. The computer 300 may then read and execute the programs 307a to 307c.

Merchandise items on store shelves are able to be identified.

**Claims**

1. An information processing program that causes a computer to execute a process comprising:

   identifying, from a video of an area including a shelf where merchandise in a store is placed, an action of a specific user picking up a piece of merchandise from the shelf, the specific user being one of plural persons;
   identifying, from a video of an area including an accounting machine in the store, each of the specific user and the accounting machine;
   storing information on the specific user and information on the accounting machine into a storage in association with each other;
   receiving a purchase history transmitted from the accounting machine that has been associated with the specific user;
   identifying one or more pieces of merchandise included in the purchase history from the accounting machine; and
   identifying, based on a number of the pieces of merchandise identified and the number of times the action of the specific user picking up a piece of merchandise has been performed, the specific user having been associated with the accounting machine, a merchandise item to be associated with the shelf, such that a difference between a predicted value and an observed value is minimized, the predicted value being for the number of pieces of merchandise purchased and being based on the action of picking up a piece of merchandise.

2. The information processing program according to claim 1, wherein the processing further includes:
   identifying the merchandise item to be associated with the shelf including:

   setting a variable related to a combination of the shelf and a predetermined merchandise item;
   calculating a value of the variable, based on simultaneous equations where the predicted value equals the observed value, the predicted value resulting from multiplication of the variable by the number of times the action of the specific user picking up a piece of merchandise has been performed; and
   identifying, as the merchandise item to be associated with the shelf, a predetermined merchandise item that forms a pair with the shelf related to a variable for which the calculated value becomes equal to or larger than a threshold.

3. The information processing program according to claim 1, wherein the processing further includes:

setting a predicted value vector and an observed value vector having an element that is the observed value, the predicted value vector resulting from multiplication of a variable vector by a matrix having an element that is the number of times the action of the specific user picking up a piece of merchandise has been performed, the variable vector having an element that is a variable related to a combination of the shelf and a predetermined merchandise item;
calculating a variable vector that minimizes a value resulting from subtraction of the observed value vector from the predicted value vector; and
identifying, based on values of elements of the variable vector calculated, the merchandise item to be associated with the shelf.

4. The information processing program according to claim 1, wherein the processing further includes: identifying, based on the purchase history, a merchandise item commonly purchased by plural users who have picked up the merchandise item from the same shelf, the commonly purchased merchandise item being a merchandise item acquired from the same shelf.

5. An information processing method comprising:

identifying, from a video of an area including a shelf where merchandise in a store is placed, an action of a specific user picking up a piece of merchandise from the shelf, the specific user being one of plural persons;
identifying, from a video of an area including an accounting machine in the store, each of the specific user and the accounting machine;
storing information on the specific user and information on the accounting machine into a storage in association with each other;
receiving a purchase history transmitted from the accounting machine that has been associated with the specific user;
identifying one or more pieces of merchandise included in the purchase history from the accounting machine; and
identifying, based on a number of the pieces of merchandise identified and the number of times the action of the specific user picking up a piece of merchandise has been performed, the specific user having been associated with the accounting machine, a merchandise item to be associated with the shelf such that a difference between a predicted value and an observed value is minimized, the predicted value being for the number of pieces of merchandise purchased and being based on the action of picking up a piece of merchandise.

6. The information processing method according to claim 5, further including:

setting a variable related to a combination of the shelf and a predetermined merchandise item;
calculating a value of the variable, based on simultaneous equations where the predicted value equals the observed value, the predicted value resulting from multiplication of the variable by the number of times the action of the specific user picking up a piece of merchandise has been performed; and
identifying, as the merchandise item to be associated with the shelf, a predetermined merchandise item that forms a pair with the shelf related to a variable for which the calculated value becomes equal to or larger than a threshold.

7. The information processing method according to claim 5, further including:

setting a predicted value vector and an observed value vector having an element that is the observed value, the predicted value vector resulting from multiplication of a variable vector by a matrix having an element that is the number of times the action of the specific user picking up a piece of merchandise has been performed, the variable vector having an element that is a variable related to a combination of the shelf and a predetermined merchandise item;
calculating a variable vector that minimizes a value resulting from subtraction of the observed value vector from the predicted value vector; and
identifying, based on values of elements of the variable vector calculated, the merchandise item to be associated with the shelf.

8. The information processing method according to claim 5, further including identifying, based on the purchase history, a merchandise item commonly purchased by plural users who have picked up the merchandise item from the same shelf, the commonly purchased merchandise item being a merchandise item acquired from the same shelf.

9. An information processing apparatus comprising:
a control unit (150) configured to:

identify, from a video of an area including a shelf where merchandise in a store is placed, an action of a specific user picking up a piece of merchandise from the shelf, the specific user being one of plural persons;
identify, from a video of an area including an accounting machine in the store, each of the specific user and the accounting machine;
store information on the specific user and information on the accounting machine into a storage in association with each other;
receive a purchase history transmitted from the accounting machine that has been associated with the specific user;
identify one or more pieces of merchandise included in the purchase history from the accounting machine; and
identify, based on a number of the pieces of merchandise identified and the number of times the action of the specific user picking up a piece of merchandise has been performed, the specific user having been associated with the accounting machine, a merchandise item to be associated with the shelf, such that a difference between a predicted value and an observed value is minimized, the predicted value being for the number of pieces of merchandise purchased and being based on the action of picking up a piece of merchandise.

10. The information processing apparatus according to claim 9, wherein the control unit (150) is further configured to:

set a variable related to a combination of the shelf and a predetermined merchandise item;
calculate a value of the variable, based on simultaneous equations where the predicted value equals the observed value, the predicted value resulting from multiplication of the variable by the number of times the action of the specific user picking up a piece of merchandise has been performed; and
identify, as the merchandise item to be associated with the shelf, a predetermined merchandise item that forms a pair with the shelf related to a variable for which the calculated value becomes equal to or larger than a threshold.

11. The information processing apparatus according to claim 9, wherein the control unit (150) is further configured to:

set a predicted value vector and an observed value vector having an element that is the observed value, the predicted value vector resulting from multiplication of a variable vector by a matrix having an element that is the number of times the action of the specific user picking up a piece of merchandise has been performed, the variable vector having an element that is a variable related to a combination of the shelf and a predetermined merchandise item;
calculate a variable vector that minimizes a value resulting from subtraction of the observed value vector from the predicted value vector; and
identify, based on values of elements of the variable vector calculated, the merchandise item to be associated with the shelf.

12. The information processing apparatus according to claim 9, wherein the control unit (150) is further configured to identify, based on the purchase history, a merchandise item commonly purchased by plural users who have picked up the merchandise item from the same shelf, the commonly purchased merchandise item being a merchandise item acquired from the same shelf.

FIG.1

EP 4 231 261 A1

# FIG.2

Im1

# FIG.3

| SHELF 20a | SHELF 20b | SHELF 20c | ... |

$k_{aA}$ ... $k_{cD}$

| Item-A VEGETABLE | Item-B MEAT | Item-C BEVERAGE | Item-D LIQUOR | ... |

# FIG.4

D2-1

USER C1

LIQUOR (Item-D), VEGETABLE (Item-A), MEAT (Item-B)

D2-2

USER C2

FROZEN FOOD (Item-F), LIQUOR (Item-D)

D2-3

USER C3

MEAT (Item-B), LIQUOR (Item-D), DELICATESSEN (Item-E)

# FIG.5

# FIG.6

INFORMATION PROCESSING APPARATUS ⌇100

STORAGE UNIT ⌇150

STORAGE UNIT ⌇140

COMMUNICATION UNIT ⌇110

INPUT UNIT ⌇120

DISPLAY UNIT ⌇130

RECEIVING UNIT ⌇151

DETECTING UNIT ⌇152

IDENTIFYING UNIT ⌇153

FIRST VIDEO BUFFER ⌇141

SECOND VIDEO BUFFER ⌇142

SHELF INFORMATION ⌇143a

REGISTER INFORMATION ⌇143b

BEHAVIOR DB ⌇144

RECORD DB ⌇145

# FIG.7

⌇143a

| SHELF NUMBER | SHELF REGION INFORMATION |
|---|---|
| T20a | REGION INFORMATION ON SHELF 20a ON IMAGE |
| T20b | REGION INFORMATION ON SHELF 20b ON IMAGE |
| T20c | REGION INFORMATION ON SHELF 20c ON IMAGE |
| ... | ... |

# FIG.8

143b

| REGISTER NUMBER | REGISTER REGION INFORMATION |
|---|---|
| T30a | REGION INFORMATION ON REGISTER 30a ON IMAGE |
| T30b | REGION INFORMATION ON REGISTER 30b ON IMAGE |
| ... | ... |

# FIG.9

144

| ITEM NUMBER | TIME | SHELF NUMBER | PERSON FEATURE INFORMATION |
|---|---|---|---|
| 1 | 2021/11/16 14:06:51 | T20a | VECTOR INFORMATION ON USER |
| 2 | 2021/11/16 14:08:12 | T20c | VECTOR INFORMATION ON USER |
| 3 | 2021/11/16 14:09:30 | T20b | VECTOR INFORMATION ON USER |
| ... | ... | ... | ... |

# FIG.10

EP 4 231 261 A1

# FIG.11

START

S101
RECEIVE FIRST VIDEO INFORMATION FROM
CAMERA ON SALES FLOOR AND REGISTER
FIRST VIDEO INFORMATION INTO FIRST
VIDEO BUFFER

S102
DETECT MERCHANDISE BEING PICKED UP
ON BASIS OF FIRST VIDEO INFORMATION

S103
HAS ACTION OF
RETURNING MERCHANDISE BEEN
DETECTED?

YES

S104
INVALIDATE
IMMEDIATELY
PRECEDING DETECTION
OF MERCHANDISE BEING
PICKED UP

NO

S105
IDENTIFY SHELF NUMBER

S106
EXTRACT PERSON FEATURE INFORMATION
ON BASIS OF FIRST VIDEO INFORMATION

S107
REGISTER TIME, SHELF NUMBER, AND
PERSON FEATURE INFORMATION INTO
BEHAVIOR DB

S108
IS PROCESSING
TO BE CONTINUED?

YES

NO

END

# FIG.12

```
                    ( START )
                        │
                        ▼                           ┌S201
        ┌─────────────────────────────────────┐
        │  OBTAIN PAYMENT START INFORMATION FROM │
        │              REGISTER                  │
        └─────────────────────────────────────┘
                        │
                        ▼                           ┌S202
        ┌─────────────────────────────────────┐
        │  RECEIVE SECOND VIDEO INFORMATION FROM │
        │ CAMERA IN REGISTER AREA AND REGISTER SECOND │
        │ VIDEO INFORMATION INTO SECOND VIDEO BUFFER │
        └─────────────────────────────────────┘
                        │
                        ▼                           ┌S203
        ┌─────────────────────────────────────┐
        │  DETECT USER FROM SECOND VIDEO INFORMATION │
        │  AND EXTRACT PERSON FEATURE INFORMATION │
        │       (QUERY FEATURE INFORMATION)      │
        └─────────────────────────────────────┘
                        │
                        ▼                           ┌S204
        ┌─────────────────────────────────────┐
        │    GENERATE MERCHANDISE ACQUISITION    │
        │  INFORMATION ON BASIS OF QUERY FEATURE │
        │    INFORMATION AND BEHAVIOR DB         │
        └─────────────────────────────────────┘
                        │
                        ▼                           ┌S205
        ┌─────────────────────────────────────┐
        │  OBTAIN PURCHASE HISTORY INFORMATION FROM │
        │              REGISTER                  │
        └─────────────────────────────────────┘
                        │
                        ▼                           ┌S206
        ┌─────────────────────────────────────┐
        │  REGISTER PAIR OF MERCHANDISE ACQUISITION │
        │   INFORMATION AND PURCHASE HISTORY     │
        │       INFORMATION INTO RECORD DB       │
        └─────────────────────────────────────┘
                        │
                        ▼                           ┌S207
                   ╱─────────────╲
                  ╱ IS NUMBER OF   ╲
                 ╱ RECORDS IN RECORD DB EQUAL TO OR ╲   NO
                ╲  LARGER THAN PREDETERMINED       ╱────────┐
                 ╲      NUMBER?                  ╱          │
                  ╲─────────────╱                           │
                        │ YES                               │
                        ▼                           ┌S208   │
        ┌─────────────────────────────────────┐
        │ EXECUTE ANY OF FIRST PROCESSING TO THIRD │
        │ PROCESSING AND IDENTIFY MERCHANDISE ITEM │
        │            PLACED ON SHELF             │
        └─────────────────────────────────────┘
                        │
                        ▼                           ┌S209
        ┌─────────────────────────────────────┐
        │   OUTPUT RELATION BETWEEN SHELF AND    │
        │    MERCHANDISE ITEM PLACED ON SHELF    │
        └─────────────────────────────────────┘
                        │
                        ▼
                     ( END )
```

# FIG.13

COMPUTER 300

| CPU 301 | INPUT DEVICE 302 | DISPLAY 303 | COMMUNICA-TION DEVICE 304 | INTERFACE DEVICE 305 |

308 BUS

RAM 306
- RECEIVING PROCESS 306a
- DETECTING PROCESS 306b
- IDENTIFYING PROCESS 306c

HARD DISK DEVICE 307
- RECEIVING PROGRAM 307a
- DETECTING PROGRAM 307b
- IDENTIFYING PROGRAM 307c

EP 4 231 261 A1

Europäisches
Patentamt

European
Patent Office

Office européen
des brevets

# EUROPEAN SEARCH REPORT

Application Number

EP 22 20 2462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/184270 A1 (OMER AVINOAM [IL] ET AL) 11 June 2020 (2020-06-11) * abstract; figures * * paragraphs [0141] - [0168] * | 1-12 | INV. G07G1/14 G06Q20/20 G06V20/52 G06V40/20 |
| X | US 10 713 670 B1 (MOON HANKYU [US] ET AL) 14 July 2020 (2020-07-14) * abstract; figures * * column 6, line 27 - column 10, line 64 * | 1-12 | |
| A | US 2018/253708 A1 (MOHANAKRISHNAN JAIKRISHNA [JP] ET AL) 6 September 2018 (2018-09-06) * abstract; figures * * paragraphs [0061] - [0139] * | 1-12 | |
| A | US 2019/172039 A1 (KAMBARA YASUSHI [JP] ET AL) 6 June 2019 (2019-06-06) * abstract; figures * * paragraphs [0085] - [0146], [0216] - [0256] * | 1-12 | TECHNICAL FIELDS SEARCHED (IPC) G07G G06Q G06V |

The present search report has been drawn up for all claims

| Place of search | Date of completion of the search | Examiner |
|---|---|---|
| The Hague | 10 July 2023 | Schöndienst, Thilo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 2462

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | | Publication date | Patent family member(s) | | Publication date |
|---|---|---|---|---|---|
| US 2020184270 | A1 | 11-06-2020 | US | 10607116 B1 | 31-03-2020 |
| | | | US | 2020184270 A1 | 11-06-2020 |
| | | | WO | 2020089896 A1 | 07-05-2020 |
| US 10713670 | B1 | 14-07-2020 | NONE | | |
| US 2018253708 | A1 | 06-09-2018 | JP WO2017085771 A1 | | 20-09-2018 |
| | | | US | 2018253708 A1 | 06-09-2018 |
| | | | WO | 2017085771 A1 | 26-05-2017 |
| US 2019172039 | A1 | 06-06-2019 | CN | 108780596 A | 09-11-2018 |
| | | | EP | 3422309 A1 | 02-01-2019 |
| | | | EP | 3761281 A1 | 06-01-2021 |
| | | | JP | 6968399 B2 | 17-11-2021 |
| | | | JP | 2017157216 A | 07-09-2017 |
| | | | SG | 11201807291P A | 27-09-2018 |
| | | | US | 2019172039 A1 | 06-06-2019 |
| | | | US | 2021304176 A1 | 30-09-2021 |
| | | | WO | 2017150590 A1 | 08-09-2017 |

EPO FORM P0459

For more details about this annex : see Official Journal of the European Patent Office, No. 12/82